# EUROPÄISCHE PATENTANMELDUNG

(11) **EP 2 058 608 A2**
(43) Veröffentlichungstag der Anmeldung: **13.05.2009**
(21) Anmeldenummer: 08105731.7
(22) Anmeldetag: 04.11.2008
(51) Int. Cl.: F25B 35/04

(54) **Sorber-Wärmetauscher einer Adsorptions-Wärmepumpe**

(30) Priorität: 09.11.2007 AT 18062007
(71) Anmelder: Vaillant GmbH, 42859 Remscheid (DE)
(72) Erfinder: Burgdorf, Achim, 42929 Wermelskirchen (DE); Lang, Rainer, 51519 Odenthal (DE); Marth, Frank, 56581 Melsbach (DE); Neubert, Marcel, 08209 Auerbach (DE); Wienen, Johann, 46359 Heiden (DE)

(57) **Zusammenfassung**

Sorber-Wärmetauscher für eine Adsorptionswärmepumpe mit mindestens einem flüssigkeitsdurchströmten Sorberrohr (1), an dem Rippen oder Lamellen (10) angeordnet sind, wobei die Rippen oder Lamellen (10) mit einem Sorbens (4) in Kontakt sind, wobei im Sorber-Wärmetauscher Kältemitteldurchströmkanäle (11) mit durchgängig freiem Strömungsquerschnitt vorhanden sind, wobei die Kältemitteldurchströmkanäle (11) durch Umbiegungen (12) der Lamellen (10) oder Rippen gebildet werden, wobei zwischen den Umbiegungen (12) und der nächsten benachbarten Lamelle (10) oder Rippe ein Zwischenraum verbleibt, der kleiner als die Sorbensteilchen ist, oder die Kältemitteldurchströmkanäle (11) durch Lochbleche oder Drahtgestricke gebildet werden, wobei deren Zwischenräume kleiner als die Sorbensteilchen sind.

## Beschreibung

Die Erfindung bezieht sich auf einen Sorber-Wärmetauscher einer AdsorptionsWärmepumpe.

Sorber von Adsorptionswärmepumpen agieren je nach Betriebszustand der Wärmepumpe zeitweise als Adsorber und zeitweise als Desorber.

Bei Adsorptions-Wärmepumpen wird ein von einer Umweltwärmequelle verdampftes Kältemittel von einem Adsorber adsorbiert, wodurch dieser sich bei der Adsorption erhitzt. Diese Wärme wird als Nutzwärme abgeführt. Anschließend muss das Kältemittel bei der Desorption wieder aus dem Adsorber, der dann als Desorber fungiert, durch Wärmezufuhr ausgetrieben werden. Das Kältemittel kondensiert an einem Kondensator, der wiederum die Wärme als Nutzwärme abgibt.

Derartige Adsorptionswärmepumpen mit Sorber-Wärmetauschern sind beispielsweise aus DE 199 02 695 A1, DE 100 24 793 B4, DE 101 19 258 A1, DE 102 32 726 A1 und DE 100 33 972 A1 bekannt. Der Sorber-Wärmetauscher besteht dabei stets aus einem wasserdurchströmten Wärmetauscher mit Rippen oder Lamellen; auf den Rippen oder Lamellen ist ein Sorptionsmittel zumeist in Form eines Zeolithen angeordnet. Diese Sorber sind dabei stets in einem vakuumdichten Behälter zusammen mit einer Verdampfer-Kondensator-Einheit angeordnet. Der Behälter ist aufgrund des Unterdrucks im Behälter zumeist zylindrisch, um nicht aufgrund der Kollabierungskräfte in sich zusammen zu fallen. Angepasst auf die Behälterform weist ein Sorber gemäß dem Stand der Technik zylindrische Form auf; aus EP 0 181 375 B1 sind auch quaderförmige Sorber bekannt.

Aus der DE 100 15 886 A1 geht ein mehrteiliger Sorber-Wärmetauscher hervor. Die JP 11304290 zeigt einen Wärmetauscher mit durchführenden Leitungen, bei dem alle Leitungen von demselben flüssigen Medium durchströmt werden, wobei ein Teil dieser Leitungen porös ist.

Den aus dem Stand der Technik bekannten Sorber-Wärmetauschern ist gemein, dass das Sorbens weder gleichmäßig befeuchtet, noch gleichmäßig entfeuchtet wird. Bei bisherigen Sorbern strömt bei der Adsorption Kältemittel von außen in den Sorber. Außen liegendes Sorbens wird hierbei befeuchtet und gibt Wärme ab. Weiter innen liegendes Sorbens wird durch Wärmeleitung erwärmt und kommt nur noch mit dem Kältemittel in Kontakt, welches das außen liegende Sorbens bereits überstrichen hat. Gerade zum Ende des Adsorptionsprozesses ist der Sorbens innen so warm, dass er kaum noch Kältemittel aufnimmt.

Beim Desorbieren wird zunächst das Kältemittel aus dem außen liegenden Sorbens aus dem Sorber ausgetrieben. Kältemittel aus dem Inneren des Sorbers strömt an dem außenliegenden Sorbens vorbei und wird teilweise wieder in diesem gebunden. Diese Begleiterscheinungen bei der Adsorption und Desorption haben zur Folge, dass der Arbeitsprozess verlangsamt wird und der Wirkungsgrad der Anlage abnimmt.

Aufgabe der vorliegenden Erfindung ist es, einen Sorber-Wärmetauscher einer AdsorptionsWärmepumpe zu schaffen, welcher eine homogene Adsorption und Desorption des gesamten Sorbens ermöglicht.

Dies wird gemäß den Merkmalen des unabhängigen Vorrichtungsanspruchs 1 dadurch erreicht, dass die Außenoberfläche der Sorber-Wärmetauscher deutlich erhöht wird. Der Sorber-Wärmetauscher verfügt über interne Kältemitteldurchströmkanäle, in denen kein Sorbens gelagert ist; über diese Kanäle kann ebenfalls Kältemittel zu- und abgeführt werden. Die Kältemitteldurchströmkanäle können durch Umbiegungen der Lamellen oder Rippen gebildet werden, wobei zwischen den Umbiegungen und der nächsten benachbarten Lamelle oder Rippe ein Zwischenraum verbleibt, der kleiner als die Sorbensteilchen ist. Hierdurch wird ein Herausfallen des Sorbens verhindert. Alternativ kann auch ein Lochblech oder Drahtgestrick, das ein Herausfallen des Sorbens verhindert, verwendet werden. Dabei sollte der Öffnungsgrad möglichst groß sein, damit der Kältemitteldampf möglichst ungehindert das Sorbens erreicht beziehungsweise von diesem weggeführt werden kann.

Die Erfindung wird nun anhand der folgenden Figuren detailliert erläutert. Hierbei zeigen
Die Figuren 1 und 2 einen Behälter eines Wärmepumpenmoduls mit einem mehrteiligen Sorber-Wärmetauscher in zwei unterschiedlichen Ansichten,
die Figuren 3 und 4 einen erfindungsgemäßen Teil-Sorber-Wärmetauscher wiederum in zwei unterschiedlichen Ansichten und
Figur 5 eine Variante einer erfindungsgemäßen Teil-Sorber-Wärmetauschers.

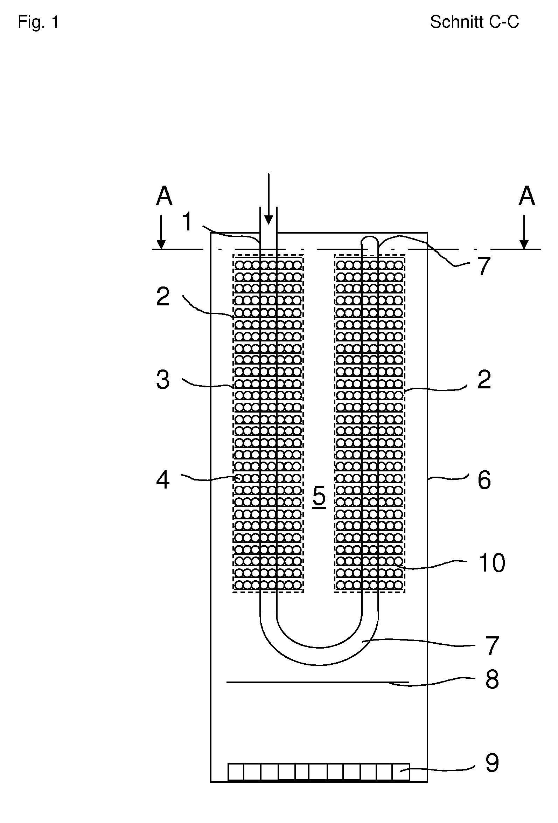

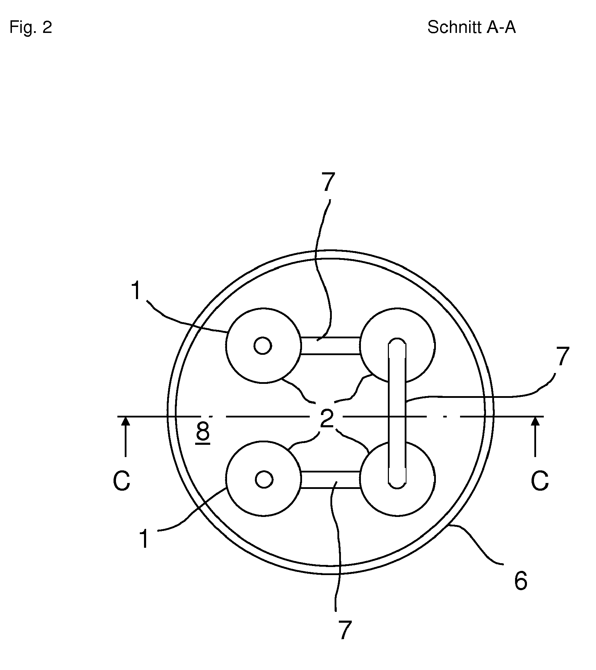

Die Figuren 1 und 2 zeigen einen Behälter 6 eines Wärmepumpenmoduls mit einem mehrteiligen Sorber-Wärmetauscher, einem Strahlungsschutz 8 und einem Verdampfer /Kondensator 9. Der Sorber-Wärmetauscher wird von einem flüssigkeitsdurchströmten Sorberrohr 1 durchdrungen und besteht aus mehreren Teil-Sorber-Wärmetauschern 2, welche seriell über flüssigkeitsdurchströmte Verbindungsrohre 7 miteinander verbunden sind. Die Teil-Sorber-Wärmetauscher 2 verfügen über Lamellen 10, auf denen ein Sorbens 4 in Form eines Granulates (z.B. Zeolith-Körner) aufgebracht ist. Um die Lamellen 10 ist ein Gitternetz 3 angeordnet, welches verhindert, dass Sorbens 4 aus den Teil-Sorber-Wärmetauschern 2 fallen kann. Um die Teil-Sorber-Wärmetauscher 2 herum befindet sich Dampfraum 5. Im Behälter 6 befindet sich ferner lediglich ein Kältemittel.

In der Adsorptionsphase wird vom Verdampfer / Kondensator 9, der dann als Verdampfer agiert, Kältemittel verdampft, wodurch Kältemitteldampf in den Dampfraum 5 dringt. Der Kältemitteldampf dringt in die Teil-Sorber-Wärmetauscher 2 ein, wobei das Sorbens 4 zunächst trocken ist. Das Sorbens 4 nimmt das Kältemittel auf und erhitzt sich dabei. Die freiwerdende Wärme wird vom Sorbens 4 über die Lamellen 10 auf die Flüssigkeit im Sorberrohr 1 übertragen und kann außerhalb des Behälters 6 für Heizzwecke verwendet werden. Der Strahlungsschutz 8 verhindert einen direkten Wärmeaustausch - zum Beispiel via Wärmestrahlung - zwischen dem Verdampfer / Kondensator 9 und den Teil-Sorber-Wärmetauschern 2. Der Adsorptionsprozess ist beendet, sobald sich derartig viel Kältemittel im Sorbens 4 befindet, dass dieses kein weiteres Kältemittel aufnimmt oder die Aufnahme nur noch langsam erfolgte.

In der Desorptionsphase wird warme Flüssigkeit durch das Sorberrohr 1 geleitet. Durch die zugeführte Wärme wird das Kältemittel aus dem Sorbens 4 ausgetrieben. Der Kältemitteldampf durchströmt den Dampfraum, gelangt an den Verdampfer / Kondensator 9, der dann als Kondensator agiert, und kondensiert an ihm. Der Desorptionsprozess ist spätestens beendet, sobald sich kein Kältemittel mehr im Sorbens 4 befindet; dieses also trocken ist. Der Prozess kann jedoch auch beendet werden, wenn sich nur noch sehr wenig Kältemittel im Sorbens befindet.

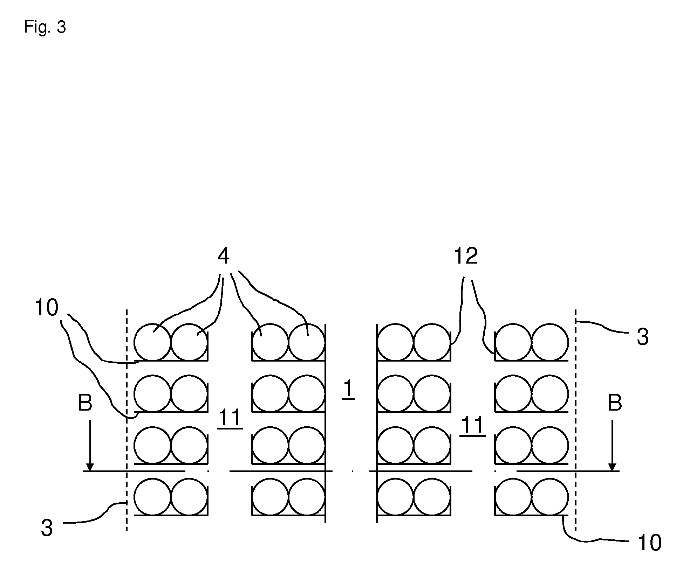

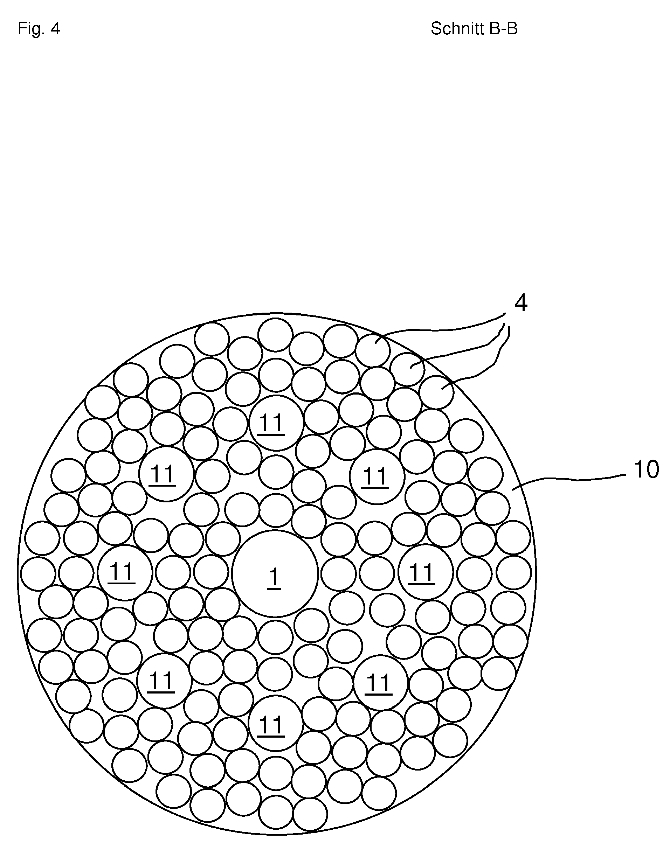

Die Figuren 3 und 4 zeigen einen Ausschnitt aus einem Teil-Sorber-Wärmetauscher 2 mit Kältemitteldurchströmkanälen 11. Die Kältemitteldurchströmkanäle 11 werden durch tiefgezogene Umbiegungen 12 in den Lamellen 10 gebildet. Die Umbiegung 12 muss kleiner als der Lamellenabstand sein, um die Durchlässigkeit für das Kältemittel zu gewährleisten. Zugleich muss die Umbiegung 12 derart groß sein, dass kein Sorbens 4 in die Kältemitteldurchströmkanäle 11 fallen kann. Durch diese Kältemitteldurchströmkanäle 11 kann Kältemittel ins Innere der Teil-Sorber-Wärmetauscher 2 strömen, so dass auch innen liegendes Sorbens leicht in Kontakt mit Kältemittel gelangt.

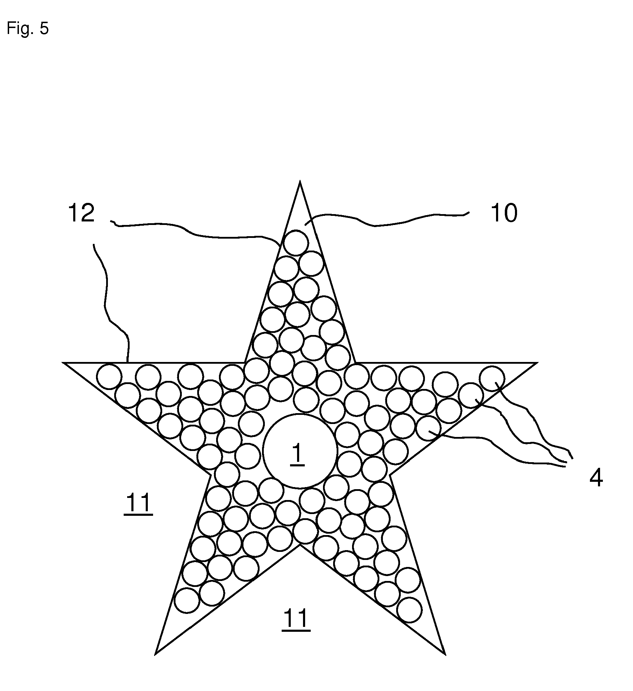

Figur 5 zeigt eine Lamelle 10 mit Kältemitteldurchströmkanälen 11 in Form von Schlitzen, an deren Rändern Umbiegungen 12 das Herausfallen des Sorbens 4 in die Kältemitteldurchströmkanäle 11 verhindern.

Durch besagte Maßnahmen wird die Außenoberfläche der Sorber-Wärmetauscher deutlich erhöht, was sowohl den Adsorptions-, als auch Desorptionsprozess optimiert. Die genannten Maßnahmen können einzeln oder kombiniert angewendet werden. Die Sorber-Wärmetauscher können jeweils, wie in den Abbildungen dargestellt, von einem Sorberrohr oder auch mehreren Sorberrohren, die vorzugsweise mäanderförmig angeordnet sind, durchdrungen werden.

## Patentansprüche

1. Sorber-Wärmetauscher für eine Adsorptionswärmepumpe mit mindestens einem flüssigkeitsdurchströmten Sorberrohr (1), an dem Rippen oder Lamellen (10) angeordnet sind, wobei die Rippen oder Lamellen (10) mit einem Sorbens (4) in Kontakt sind, **dadurch gekennzeichnet, dass** im Sorber-Wärmetauscher Kältemitteldurchströmkanäle (11) mit durchgängig freiem Strömungsquerschnitt vorhanden sind, wobei die Kältemitteldurchströmkanäle (11) durch Umbiegungen (12) der Lamellen (10) oder Rippen gebildet werden, wobei zwischen den Umbiegungen (12) und der nächsten benachbarten Lamelle (10) oder Rippe ein Zwischenraum verbleibt, der kleiner als die Sorbensteilchen ist, oder die Kältemitteldurchströmkanäle (11) durch Lochbleche oder Drahtgestricke gebildet werden, wobei deren Zwischenräume kleiner als die Sorbensteilchen sind.
